# EUROPEAN PATENT APPLICATION

(11) **EP 0 842 726 A1**
(43) Date of publication of application: **20.05.1998**
(21) Application number: 97922079.5
(22) Date of filing: 16.05.1997
(51) Int. Cl.: B23K 9/127, B23K 9/095, B23K 31/00, G01B 11/24

(54) **ARC WELDING PATH DETECTING METHOD AND ARC WELDING PATH SENSOR**

(30) Priority: 16.05.1996 JP 144862/96
(71) Applicant: FANUC LTD., Minamitsuru-gun, Yamanashi 401-05 (JP)
(72) Inventor: WATANABE, Atsushi, Minamitsuru-gun, Yamanashi 401-05 (JP); TERADA, Akihiro, Fujiyoshida-shi, Yamanashi 403 (JP)
(74) Representative: Billington, Lawrence Emlyn
(86) International application number: JP9701658
(87) International publication number: WO9743074

(57) **Abstract**

An arc welding path detection method and an arc welding path sensor capable of facilitating a preliminary operation necessary for detecting an arc welding path, to reduce an operator's load. A matting agent for developing diffused reflection of light is sprayed on or applied to a region surrounding an arc welding path (6), so that light (3) radiated from a sensor (2) is diffusedly reflected on a surface of a workpiece (4) and the reflected light (5) is received by a light receiving section of the sensor (2) without fail. It is unnecessary to manually scratch and roughen the surface of the workpiece (4), whereby the operator's load is reduced. Further, a spray nozzle (9) is attached to the sensor (2) integrally therewith and the matting agent is sprayed in synchronism with an arc welding ON/OFF command, whereby the process from the preliminary operation for detecting the welding path to the detection operation of the welding path is fully automated.

## Description

### Technical Field

The present invention relates to improvements in an arc welding path detection method and an arc welding path sensor.

### Background Art

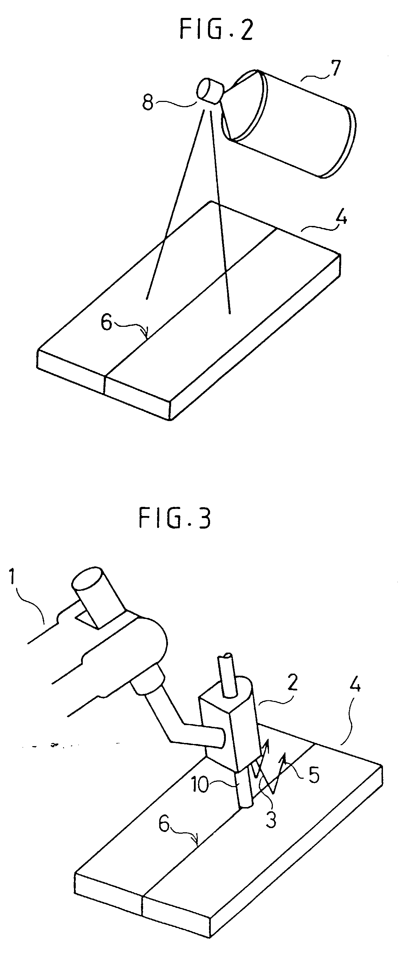

An arc welding path sensor for detecting an arc welding path utilizing radiation and reflection of light are generally used. However, in the case where a surface of a workpiece is finished to be smoother than required, e.g., in the case where the surface has been grinded prior to the arc welding or a material of the workpiece is finished more finely than required in a rolling process, a light 3 radiated from a light source of a sensor 2 which is attached to a robot arm 1 is totally reflected at a surface of a workpiece 4, as shown in FIG. 3, so that a light receiving section of the sensor 2 may fail to detect a reflected light 5.

The sensor 2 recognizes an arc welding path 6 based on the detection data of the reflected light 5, and therefore, the recognition of the arc welding path 6 is not achieved unless the reflected light 5 is received by the light receiving section of the sensor 2.

The above problem may arise in the case where the arc welding is performed on the workpiece 4 with a high reflectance, such as one made of aluminum etc., or in the case where an angle between a torch 10 and the workpiece 4, i.e. an incident angle of the light 3 with respect to the workpiece 4 becomes small in welding.

Conventionally, in order to solve the problem, the surface of the workpiece 4 is frosted by making fine scratches thereon so that the incident light 3 is diffusedly reflected to be the reflected light 5 in various directions. For example, the surface of the workpiece 4 is rubbed with steel wool or roughened by a wire brush-like rotating tool attached to a motor tool. However, there is no special tool designed for this purpose and all the operation needs to be manually performed by an operator, to cause a problem of an operation efficiency.

### Disclosure of Invention

An object of the present invention is to provide a welding path detection method and an arc welding path sensor capable of reliably detecting an arc welding path without performing a cumbersome preliminary process even for workpiece having a smoothly finished surface of high reflectance.

According to the present invention, a matting agent for developing diffused reflection of light is coated by spraying or applying on a region surrounding an arc welding path, and then the welding path is detected by a sensor.

Since the surface of a workpiece is coated with the matting agent to enhance diffused reflection, the light radiated on the workpiece is diffusedly reflected on the surface in various directions even in the case where the surface of the workpiece is smooth or the incidence angle of radiated light is small, so that the reflected light can be received by a light receiving section of the sensor.

By proving the sensor with means for spraying or applying the matting agent, the coating of the matting agent can be carried out simultaneously with the arc welding without any manual operation.

Further, by providing control means for ON/OFF controlling the coating operation of the matting agent in response to a welding ON/OFF command, the coating operation of the matting agent is fully automated.

### Brief Description of Drawings

FIG. 1 is a schematic diagram illustrating an embodiment of an arc welding path sensor for carrying out the method of the present invention;
FIG. 2 is a schematic diagram illustrating an arc welding path detection method according to another embodiment of the invention; and
FIG. 3 is a schematic diagram illustrating a conventional method of detecting an arc welding path.

### Best Mode of Carrying out the Invention

First, referring to FIG. 2, an arc welding path detection method according to an embodiment of the invention will be described.

An aerosol spray can 7 contains a matting agent in the form of powder, and compressed air, dimethyl ether/LP gas or the like for spraying the matting agent from a nozzle 8.

The matting agent is a powdery or granular material consisting of particles coarser than those of pigments used for ordinary paints, and is sprayed together with a medium from the nozzle 8 under the pressure of the compressed air, dimethyl ether, LP gas, or the like when a head of the nozzle 8 is pressed.

If the matting agent coated on a workpiece 4 needs to be securely fixed thereon, an organic solvent in which synthetic resin is dissolved is used as the medium, and in order to permit the matting agent coated on the workpiece 4 to be easily blown off, a highly volatile liquid such as alcohol is used as the medium. In the former case, after spraying, a coat of the synthetic resin is formed on the surface of the workpiece 4 and the matting agent is retained on the surface in a manner such that it protrudes from the coat of the synthetic resin. Needless to say, the coat of synthetic resin should not be so thick that the matting agent settles, and the thickness of the coat should be reduced to such a degree that the matting agent protrudes from the coat so as to enhance the effect of diffused reflection achieved by the matting agent. In the latter case, the medium evaporates immediately after spraying, and accordingly, the matting agent is present on the surface of the workpiece 4 as it is merely spread thereon, permitting the matting agent to be easily blown off after welding operation is completed.

Prior to performing arc welding on a workpiece 4 having a surface more finely finished than required or on a workpiece 4 made of a high reflectance material, such as aluminum, an operator sprays the matting agent on the surface of the workpiece 4, particularly in a region surrounding an arc welding path 6 which is formed at a junction of the workpieces 4, by the aforementioned spray can 7 so that the surface area is coated with the matting agent. This operation is obviously much easier than rubbing the surface of the workpiece 4 with steel wool or roughening the surface of the workpiece 4 by a motor tool having a wire brush-like rotating tool attached thereto.

Detection of the arc welding path 6 by a sensor 2 and welding operation for moving a torch 10 along the detected arc welding path 6 are carried out in the same manner as in the conventional case shown in FIG. 3. However, since the matting agent in the form of powder is coated in the vicinity of the arc welding path 6, the powder reflects light diffusedly in all directions and the light 5 reflected from the workpiece 4 can be easily sensed by the light receiving section of the sensor 2 even in the case where the welding operation is performed on the high-reflectance workpiece 4, such as a workpiece made of aluminum, or when the angle between the torch 10 and the workpiece 4, i.e. the incidence angle of the light 3 with respect to the workpiece 4 becomes small in welding, so that the recognizing and tracking operation of the arc welding path 6 based on detection of the reflected light 5 are reliably performed.

In the example shown in FIG. 2, the matting agent is sprayed on the workpiece 4 using the aerosol spray can 7. Instead of using the spray can 7, a spray gun and an air compressor, etc. may be used, or a medium with a matting agent mixed and stirred may be directly applied to the surface of the workpiece 4 with a brush or the like. Also, a suitable amount of a metal-corrosive liquid may be sprayed, or the surface of the workpiece 4 may be roughened by satin finishing such as sandblasting. Although the metal-corrosive liquid or quartz sand is not coated on the surface of the workpiece 4, such processes can be regarded as equivalent to the use of a matting agent in view of the consequent matting effect.

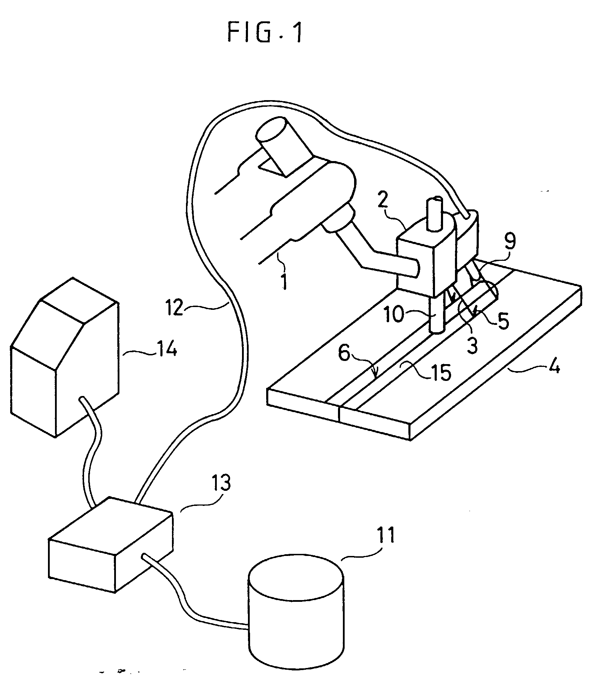

FIG. 1 shows an arc welding path sensor for automatically spraying the matting agent at the time of the arc welding to eliminate the preliminary process such the matting agent-spraying operation to be carried out by an operator.

In the same manner as the conventional case shown in FIG. 3, the sensor 2 and the torch 10 are attached to a distal end of the robot arm 1. In this embodiment, a spray nozzle 9, which forms a part of the sensor 2, is mounted on a body of the sensor 2 integrally therewith. It is necessary to mount the spray nozzle 9 at a position such that it always precedes the irradiated light 3 from the sensor 2 in the direction of movement of the torch 10, as shown in FIG. 1, or to adjust the nozzle opening and direction of the spray nozzle 9 so that the area on which the matting agent from the spray nozzle 9 is applied always cover the irradiated area of the light from the light source of the sensor 2.

The spray nozzle 9 is connected to a large-capacity spray can 11 via a hollow cable 12 and a control valve 13, and the spray can 11 contains a powdery matting agent, a medium for the agent and compressed air or dimethyl ether/LP gas, etc., like the foregoing embodiment. The control valve 13 is controlled to open and close in response to an ON/OFF command, i.e., a welding ON/OFF command from a robot control device 14 for controlling the operation of the robot arm 1. Namely, the spray nozzle 9 does not have a complex structure such as that of an ordinary spray gun having a double nozzle, a needle, etc. The spray device is constituted by simply dividing the spray can 7 as shown in FIG. 2 into the nozzle 8 and the body of the spray can and therefore, the ON/OFF operation of the control valve 13 corresponds to pressing/releasing action of the nozzle 8 of the spray can 7 shown in FIG. 2. The robot control device 14 serves as an ON/OFF controller of the spray nozzle 9.

Needless to say, the spray nozzle 9 may comprise an inner nozzle for spouting liquid and an outer nozzle disposed around the inner nozzle for spouting air, like a conventional spray gun, so that the liquid and air are supplied via separate feed lines. In this case, an air compressor or the like can be used as an air supply source. The ON/OFF control of the spraying operation can be achieved only by an ON/OFF control of the air supply, though the controllability depends on an amount of retraction of the needle and viscosity of the medium. Specifically, in the case where the medium and air are supplied via separate feed lines, the spraying operation can be ON/OFF controlled by directly connecting a reservoir cup for the medium to the inner nozzle with the needle retracted to a certain degree and interposing the control valve 13 in the air feed line. Alternatively, the ON/OFF control of the spraying operation can be carried out by adjusting the retracting amount of the needle to open/close the inner nozzle with the supply of air held ON. In this case, a solenoid or the like for moving the needle forward and backward is provided so that the ON/OFF control of the spraying may be achieved by controlling the forward/backward motion of the needle, instead of the ON/OFF control of the control valve 13. Further, both of the control valve 13 and a solenoid may be provided for the ON/OFF control of the supply of air and the opening/closing of the nozzle.

In the embodiment shown in FIG. 1, it is unnecessary for an operator to spray or apply the matting agent on the workpiece 4, and the coating operation of the matting agent 15 is automatically carried out simultaneously with the arc welding operation, whereby an operation efficiency can be substantially improved. In the case where the device is used after a long interval, the spraying may possibly fail to start simultaneously with a start of the arc welding as bubbles have entered the spray nozzle 9 or the hollow cable 12, for example. Since, however, the ON/OFF control of the control valve 13 can be carried out based on a machining program in the robot control device 14, for example, in accordance with a T code etc., the program may be set so as to open the control valve 13 before starting the arc welding.

According to the present invention, a surface of a workpiece can be easily matted without the labor-consuming operation, such as rubbing the workpiece surface with steel wool or roughening the workpiece surface by a wire brush-like rotating tool, so that the arc welding path can be detected even if the workpiece has high reflectance or when the arc welding is performed with the torch inclined. Further, the arc welding path sensor of the present invention comprises means for spraying or applying the matting agent on the workpiece, and the spraying or applying operation of the matting agent can be ON/OFF controlled in response to the welding ON/OFF command, whereby the process from the coating of the matting agent to the detection of the arc welding path can be fully automated.

## Claims

1. An arc welding path detection method for an arc welding robot, comprising the steps of:
(a) coating a region surrounding a welding path on a workpiece with a matting agent for facilitating diffused reflection of light;
(b) radiating light on the workpiece;
(c) sensing reflection of the light radiated on the workpiece in said step (b) by a sensor provided at a distal end of a robot arm to detect the welding path; and
(d) moving a torch provided at the distal end of the robot arm along the welding path detected in said step (c) to perform the arc welding.

2. An arc welding path detection method according to claim 1, wherein said step (a) includes a step of spraying said matting agent on a surface of the workpiece.

3. An arc welding path detection method according to claim 1, wherein said step (a) includes a step of applying said matting agent to a surface of the workpiece.

4. An arc welding path sensor comprising:
light radiating means attached to a distal end of an arm of an arc welding robot, for radiating light on a workpiece;
detecting means for sensing a reflected light from the workpiece to detect a welding path; and
coating means for coating a forward region on the workpiece preceding a region on which the light is radiated by said light radiating means along the welding path with a matting agent.

5. An arc welding path sensor according to claim 4, wherein said coating means sprays said matting agent on a surface of the workpiece.

6. An arc welding path sensor according to claim 4, wherein said coating means applies said matting agent to a surface of the workpiece.

7. An arc welding path sensor according to claim 4, further comprising control means for ON/OFF controlling the coating by said coating means in response to an ON/OFF command for the welding operation.
